# EUROPÄISCHE PATENTSCHRIFT

(11) **EP 2 224 142 B1**
(45) Veröffentlichungstag und Bekanntmachung des Hinweises auf die Patenterteilung: **02.09.2015**
(21) Anmeldenummer: 10155002.8
(22) Anmeldetag: 01.03.2010
(51) Int. Cl.: F16B 25/10

(54) **Gewindeformende Schraube**
Thread moulding screw
Vis autotaraudeuse

(30) Priorität: 27.02.2009 DE 202009001922 U
(43) Veröffentlichungstag der Anmeldung: 01.09.2010
(73) Patentinhaber: Scanu, Antonio, 58840 Plettenberg (DE); Scanu, Ramona, 58840 Plettenberg (DE)
(72) Erfinder: Scanu, Antonio, 58840 Plettenberg (DE)
(74) Vertreter: Haverkamp, Jens

(56) Entgegenhaltungen:
- DE-A1- 3 337 534
- DE-B3- 10 254 319
- DE-U1- 9 307 816
- GB-A- 2 077 645
- US-A1- 2006 251 493

## Beschreibung

Gegenstand der Erfindung ist eine gewindeformende Schraube mit einem an einen Schraubenkern angeformten Gewinde zum Festsetzen der Schraube in einem Befestigungsgrund, wobei das Gewinde, ausgehend von der Spitze der Schraube zunächst einen gewindeformenden Abschnitt als Vorgewindeabschnitt aufweist, an welchen Vorgewindeabschnitt sich ein Hauptgewindeabschnitt anschließt, wobei die Flankenhöhe des Gewindes des Vorgewindeabschnittes kleiner ist als diejenige des im zylindrischen Teil des Schraubenschaftes befindlichen Hauptgewindes, wobei sich der Vorgewindeabschnitt, bezogen auf seine Längserstreckung zumindest mehrheitlich im zylindrischen Teil des Schraubenschaftes erstreckt und in diesem zumindest eine Spantasche eingebracht ist.

Eine derartige gewindeformende Schraube, die grundsätzlich auch ohne vorheriges Einbringen eines Bohrloches in einen Befestigungsgrund eingeschraubt werden kann, ist aus DE 20 2004 011 145 U1 bekannt. Die in diesem Dokument beschriebene Schraube ist als Schraube zum Einbringen in einen mineralischen Befestigungsgrund, wie beispielsweise einen Backstein, einen Kalksandstein oder einen Gasbetonstein konzipiert. Dabei dient das Vorgewinde dem Zweck, in die Bohrlochwandung ein Vorgewinde einzuformen, in welches sich anschließend das Hauptgewinde einschneidet. Durch Vorsehen des Vorgewindes soll diese vorbekannte Schraube nicht nur höhere Auszugskräfte standhalten, sondern auch nur ein geringeres Drehmoment zum Einschrauben derselben in einen Befestigungsgrund der vorgenannten Art benötigen.

Schrauben, wie aus DE 20 2004 011 145 U1 bekannt, bestehen aus einem gehärteten Stahlwerkstoff. Gleiches gilt für Holzbauschrauben. Das Härten des Werkstoffes ist notwendig, damit diese, gerade wenn diese länger sind, dem zum Einbringen der Schrauben in einen solchen Befestigungsgrund angelegten Drehmoment standhalten. Auch wenn mit der aus DE 20 2004 011 145 U1 bekannten Schraube das Drehmoment zum Einbringen derselben in einem gewissen Maße gegenüber demjenigen einer Schraube ohne Vorgewinde reduziert ist, wäre es wünschenswert, wenn das zum Setzen einer solchen Schraube benötigte Drehmoment noch geringer wäre.

Die gattungsbildende GB 2 077 645 A offenbart eine Bohrschraube. Diese Bohrschraube trägt einen unteren gewindefreien Bohrabschnitt. An den Bohrabschnitt schließt sich ein Vorgewindeabschnitt und an diesen ein Hauptgewindeabschnitt. In der die Bohrschneide tragenden Umfangsfläche der Bohrspitze sind zwei einander diametral gegenüberliegende Spantaschen vorgesehen. Die Umfangserstreckung dieser Spantaschen beträgt nur wenige Winkelgrade. Die Spantaschen sind nicht in den Schraubenkern eingebracht.

DE 33 97 534 A1 beschreibt eine Universalschraube sowie ein Werkzeug zur Herstellung derartiger Schrauben. Die aus diesem Dokumente bekannt gewordene Schraube verfügt nicht über einen Vorgewindeabschnitt. Im Bereich der sich verjüngenden Spitze dieser Schraube sind Formzonen vorgesehen, in denen der Schraubenkern um das Gewinde gegenüber der ansonsten konischen Mantelfläche zurückversetzt sind. Durch diesen Zurückversatz von in Umfangsrichtung gesehen einzelnen Gewindeabschnitten ist eine Einformung eines Gewindes in den Befestigungsgrund erleichtert.

In der DE 93 07 816 U1 wird eine Bohrschraube für Holz und Holzwerkstoffe beschrieben. An einem zylinderförmigen Schaft sind zwei Gewindegänge unterschiedlicher Höhe angeformt. Die Flankenhöhe eines jeweiligen Gewindegangs ist entlang seiner Erstreckung konstant. In einem Bereich angrenzend an die Spitze der Schraube sind zwei einander gegenüberliegende Spannuten eingebracht. Diese dienen zur Aufnahme von Spänen beim Einschrauben, wodurch hohe Radialkräfte auf das umgebende Holzmaterial und somit ein Splittern desselben vermieden werden sollen.

Der Erfindung liegt daher ausgehend von dem vordiskutierten Stand der Technik die Aufgabe zugrunde, eine eingangs genannte gewindeformende Schraube dergestalt weiterzubilden, dass vor allem das zum Setzen der Schraube notwendige Drehmoment reduziert ist.

Diese Aufgabe wird erfindungsgemäß durch eine eingangs genannte, gattungsgemäße Schraube gelöst, bei der in dem Vorgewindeabschnitt über den Umfang verteilt mehrere, in den Schraubenkern eingebrachte Spantaschen angeordnet sind und demzufolge der Schraubenkern im Bereich der Spantaschen zumindest weitestgehend eine von der zylindrischen Querschnittsform des Schraubenschaftes abweichende Querschnittsgeometrie aufweist und infolge dieser Querschnittsgeometrie das Vorgewinde im Bereich der Spantaschen durch jeweils einzelne, sich über einen gewissen Winkel erstreckende Vorgewindesegmente gebildet ist und dass sich die Vorgewindesegmente jeweils über einen Winkel von 10 bis 30°, insbesondere über etwa 20 bis 25° entlang der Mantelflächeerstrecken.

Bei dieser Schraube ist die Querschnittsgeometrie des Vorgewindeabschnittes von der runden Form abweichend. Bewirkt wird durch diese von der runden Form abweichende Querschnittsgeometrie des Schraubenkerns, dass das Vorgewinde segmentiert ist. Mithin ist das Vorgewinde durch einzelne Vorgewindesegmente gebildet, die an ihrem die Vorgewindesegmente einfassenden Mantelflächenabschnitt jeweils ein Abschnitt des Vorgewindes tragen. An der in dem Befestigungsgrund einzubringenden Bohrung liegen somit zumindest in einem Abschnitt des Vorgewindes nur die Vorgewindesegmente an. Bereits durch diese Maßnahme ist das notwendige Drehmoment zum Ausbilden der Bohrung, in die anschließend die Schraube mit ihrem Hauptgewinde eingeschraubt werden soll, reduziert. Ist beispielsweise die Querschnittsgeometrie des Schraubenkerns im Vorgewindeabschnitt dreieckförmig mit gerundeten Ecken, verfügt das Vorgewinde über drei Vorgewindesegmente. Die Vorgewindesegmente sind vorzugsweise in jeweils einem gleichen Winkelabstand zueinander angeordnet. Aufgrund der vorbeschriebenen Querschnittsgeometrie sind zwischen den Vorgewindesegmenten Spantaschen ausgebildet. Da die Spantaschen in den Schraubenkern eingebracht sind, sind diese für die Ausbildung der Vorgewindesegmente verantwortlich.

Gebildet werden die Spantaschen durch die Außenseite des zum Ausbilden der Spantaschen gegenüber der ansonsten runden Ausgestaltung umgeformten Schraubenkerns des Vorgewindeabschnittes und die den Vorgewindeabschnitt einfassende Mantelfläche desselben. Die Größe der Spantaschen ist umso größer, je geringer die Anzahl der Vorgewindesegmente ist. Die Spantaschen dienen zur Aufnahme bzw. zum Abführen der im Zuge der Gewindeformung anfallenden Späne, falls die Schraube in Holz als Befestigungsgrund eingesetzt wird. Wird eine solche Schraube in einen anderen Befestigungsgrund eingeschraubt, dienen die Spantaschen zur Aufnahme des bei dem Vorgewindeformen entstehenden Materialabfalls. Bezogen auf die Längserstreckung des Vorgewindeabschnittes befinden sich die Spantaschen bzw. erstrecken sich die Vorgewindeabschnitte zumindest mehrheitlich im zylindrischen Teil des Schraubenschaftes. Die eigentliche Spitze einer solchen Schraube ist typischerweise kurz gehalten. Eine solche Ausgestaltung der Spantaschen gewährleistet, dass das im Zuge des Erstellens der Bohrung anfallende Material (das Bohrklein) nicht im Bereich der verjüngten Spitze sammelt und sodann den weiteren Bohrvorgang behindert, zumindest jedoch das Drehmoment erhöht, sondern in die Spantaschen abgeführt wird.

Durch die von der runden Form abweichende Querschnittsgeometrie des Schraubenkerns ist es möglich, in Umfangsrichtung gesehen den Winkelbetrag, über den sich jeweils ein Vorgewindesegment erstreckt auf bestimmte Winkelgrade zu begrenzen. Es hat sich gezeigt, dass Vorgewindesegmente, die sich zwischen 10° und 30°, insbesondere zwischen 20 und 25° erstrecken, hinreichend für den gewünschten Bohr- und Gewindeformvorgang sind. Bei einem bezüglich seiner Querschnittsgeometrie im wesentlichen dreieckförmigen Schraubenkern in seinem Vorgewindeabschnitt würde dieses bedeuten, dass in der bevorzugten Ausgestaltung nur 60° bis 75° bezogen auf den 360°-Umfang der die Vorgewindesegmente einfassenden Mantelfläche tatsächlich an der Lochwandung anliegen und mit ihrem Vorgewinde in dieses eingreifen. Die Segmentierung des Vorgewindeabschnittes erfolgt im Wesentlichen über die gesamte Länge desselben und kann, wenn gewünscht, sich auch bis in den Bereich des Hauptgewindeabschnittes hinein erstrecken. Typischerweise hiervon nicht erfasst ist eine anfängliche Schraubenspitze, die demzufolge in ihrem ersten Abschnitt zur Ausbildung derselben konisch verjüngt ist. Nicht ausgeschlossen ist ferner, die Segmentierung des Vorgewindeabschnittes nur über einen Teil desselben zu konzipieren, wobei gewisse Mindestlängen des segmentierten Vorgewindeabschnittes vorzugsweise einzuhalten sind. Aus diesem Grunde ist, verglichen mit vorbekannten Schrauben das zum Einschrauben derselben in einen Befestigungsgrund, beispielsweise Holz notwendige Drehmoment deutlich geringer als bei vorbekannten Schrauben. Eine Schraube der vorstehend näher spezifizierten und bevorzugten Ausgestaltung hat eine Drehmomentreduzierung von 40% bis 50 % zur Folge. Dieses ist nicht nur für die zum Setzen eingesetzten Werkzeuge günstig, sondern auch für das Material der Schraube. Da vorbekannte Schrauben letztendlich allein zum Standhalten des auf diese aufgebrachten Drehmomentes zum Einbringen derselben in einen Befestigungsgrund gehärtet sind, brauchen die vorbeschriebenen Schrauben aufgrund des erheblich verringerten Drehmomentes grundsätzlich nicht gehärtet zu sein. Dies vereinfacht und verbilligt nicht nur den Herstellungsprozess derartiger Schrauben, sondern ermöglicht auch eine bessere Handhabung derselben, etwa im Holzbau. Mit gehärteten Schrauben verbundene Holzteile können nachträglich zueinander nicht durch Richten korrigiert werden, da diese bei einem solchen Vorgang aufgrund ihrer spröden Materialeigenschaften abbrechen. Mit ungehärteten Schrauben verbundene Bauelemente, beispielsweise Holzteile können durchaus einem Richtprozess unterworfen werden, ohne dass zu befürchten wäre, dass die Schraube bei einem nicht über Maßen ausgeführten Richtprozess den Beanspruchungen nicht standhalten würde.

Untersuchungen haben gezeigt, dass es zweckmäßig ist, die Länge des Vorgewindeabschnittes mit mindestens 25 mm oder besser mit mindestens 30 mm auszubilden. Die Länge des Vorgewindeabschnittes ist so bemessen, dass diese für den formgebenden Gewindeprozess mit dem darauf befindlichen Gewinde hinreichend ist.

In einer vorteilhaften Weiterbildung ist in zumindest einen Gewindeabschnitt eines Vorgewindesegmentes eine gleichsinnig zur Steigung des Gewindes dieses Vorgewindesegmentes verlaufende Nut eingebracht. Die Nut greift typischerweise in den Kern der Schraube ein und unterbricht die Gewindegänge somit nicht lediglich. Diese Nut mündet mit ihrem von der Spitze der Schraube wegweisenden Ende vorzugsweise in eine Spantasche. Die durch die Nut gebildeten typischerweise scharfkantigen Gewindeunterbrechungen dienen zum Unterstützen des Schneidvorganges, wobei die Nut selber zum Abtransport des ausgebrochenen oder zermahlenen Materials dient, welches aufgrund der vorbeschriebenen Ausbildung der Steigung von der Spitze weg geführt wird und sich daher im Bereich der gewindeformenden Spitze nicht oder zumindest nicht über Maßen ansammelt. Durch eine solche Nut wird das Material aus dem Befestigungsgrund zum Einbringen des Bohrloches und Ausbilden des Gewindes aus diesem wie mit einem Schneidmesser herausgeschält. Diese Maßnahme wirkt sich nochmals reduzierend auf das zum Einbringen einer solchen Schrauben ein Befestigungsgrund notwendige Drehmoment aus.

Nachfolgend ist die Erfindung anhand eines Ausführungsbeispiels unter Bezugnahme auf die beigefügten Figuren beschrieben. Es zeigen:
- **Fig. 1:**: in einer schematisierten Seitenansicht eine selbstbohrende gewindeformende Schraube,
- **Fig. 2:**: einen Querschnitt durch die Schraube der Figur 1 entlang der Linie A - B,
- **Fig. 3:**: in einer schematisierten Seitenansicht eine selbstbohrende, gewindeformende Schraube gemäß einer weiteren Ausgestaltung und
- **Fig. 4:**: einen Querschnitt entsprechend demjenigen der Figur 2 durch die Schraube der Figur 3.

Eine bei dem dargestellten Ausführungsbeispiel als Holzbauschraube konzipierte Schraube 1 verfügt über einen Schraubenkopf 2 mit einer in der Figur nicht dargestellten Werkzeugaufnahme, an den ein Schraubenschaft 3 angeformt ist. Der Schraubenschaft 3 verfügt über ein an den Schraubenkern 4 angeformtes Gewinde 5. Der Schraubenschaft 3 selbst ist in einen ersten Abschnitt, in dem das für die Auszugskräfte vorgesehene Gewinde - das Hauptgewinde 6 - angeordnet ist, und in einen Vorgewindeabschnitt 7 unterteilt. Der Vorgewindeabschnitt 7 trägt ein Vorgewinde 9, welches sich durch eine gegenüber dem Hauptgewinde reduzierte Flankenhöhe auszeichnet. Die Flankenhöhe ist der radiale Abstand der Mantelfläche des äußeren Abschlusses eines Gewindeganges von der Mantelfläche des Schraubenkerns 4 bzw. 8. Dabei ist vorgesehen, dass die Flankenhöhe des Vorgewindes 9 in dem Vorgewindeabschnitt 7 von der Spitze der Schraube 1 in Richtung zu dem Hauptgewinde 5 sukzessive zunimmt und schließlich in das Hauptgewinde 5 übergeht. In einem anderen, in den Figuren nicht dargestellten Ausführungsbeispiel ist das Hauptgewinde von dem Vorgewinde durch einen gewindefreien Schaftabschnitt getrennt.

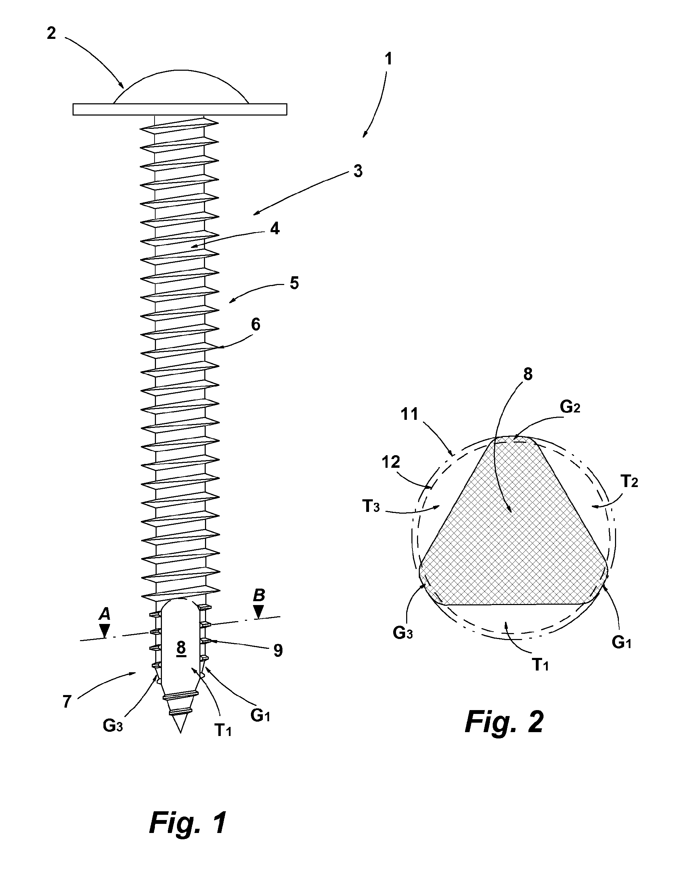

Während die Querschnittsgeometrie des Schraubenkerns 4 im Bereich des Hauptgewindes 6 kreisförmig und der Schraubenschaft daher in diesem Bereich zylindrisch ist, ist die Querschnittsgeometrie des Schraubenkerns 8 im Vorgewindeabschnitt 7 von der runden Querschnittsform deutlich abweichend. Bei dem dargestellten Ausführungsbeispiel ist der Vorgewindeabschnitt 7 mit einer dreieckförmigen Querschnittsgeometrie, wie aus Figur 2 erkennbar, konzipiert. Diese Geometrie kann auch als tribular angesprochen werden. Aufgrund dieser Querschnittskonzeption ist das Vorgewinde 9 in dem Vorgewindeabschnitt 7 durch drei Segmente G₁, G₂, G₃ gebildet. Jedes Vorgewindesegment G₁, G₂, G₃ trägt jeweils ein sich über etwa 20° des Umfanges erstreckendes Gewindesegment mit jeweils mehreren Abschnitten der Gewindegänge. Zwischen den Gewindesegmenten G₁, G₂, G₃ befindet sich jeweils eine Spantasche T₁, T₂, T₃, die somit die Gewindesegmente G₁, G₂, G₃ voneinander jeweils trennen. Gebildet sind die Spantaschen T₁, T₂, T₃ durch den jeweils in radialer Richtung äußeren Abschluss 10 des Schraubenkerns 8 des Vorgewindeabschnittes 7, anhand der Spantasche T₁ in Figur 2 eingezeichnet, und der kreisförmigen, die Vorgewindeabschnitte G₁, G₂, G₃ verbindenden und einfassenden Mantelfläche 11. Die Spantaschen T₁, T₂, T₃ erstrecken sich in Längserstreckung der Schraube 1 mehrheitlich und bei dem dargestellten Ausführungsbeispiel mit etwa zwei Drittel ihrer Längserstreckung innerhalb des zylindrischen Teils des Schaftes. Nur der untere Abschnitt der Spantaschen T₁, T₂, T₃ geht über in den sich zur Spitze der Schraube 1 hin verjüngenden Teil des Schraubenkerns. Möglich ist es auch, dass die Spantaschen sich bis in den Bereich der ersten Gewindegänge des Hauptgewindes 6 erstrecken. Die Spantaschen T₁, T₂, T₃ durchbrechen das Vorgewinde, wie dieses deutlich in der schematisierten Seitenansicht der Schraube 1 der Figur 1 erkennbar ist. Gleichzeitig wird durch die Spantaschen bezogen auf die Mantelfläche 11 der Schraube 1 ein hinreichend großer Raum geschaffen, um das beim Setzen der Schraube anfallende Bohrgut aufnehmen zu können.

Die Darstellung der Schraube 1 in Figur 2 macht deutlich, dass das Vorgewinde 9 bezogen auf den 360°-Umfang nur in einem Bruchteil davon, namentlich über etwa 60° an einer Lochwandung anliegt bzw. mit seinem Vorgewinde 9 in diese eingreift. In Figur 2 ist eine Bohrlochwandung mit dem Bezugszeichen 12 gestrichelt eingetragen. Diese weist naturgemäß einen etwas kleineren Durchmesser auf als die Mantelfläche 11. Aus der Darstellung der Figur 2 wird die besonders große Aufnahmekapazität der Spantaschen T₁, T₂, T₃ deutlich.

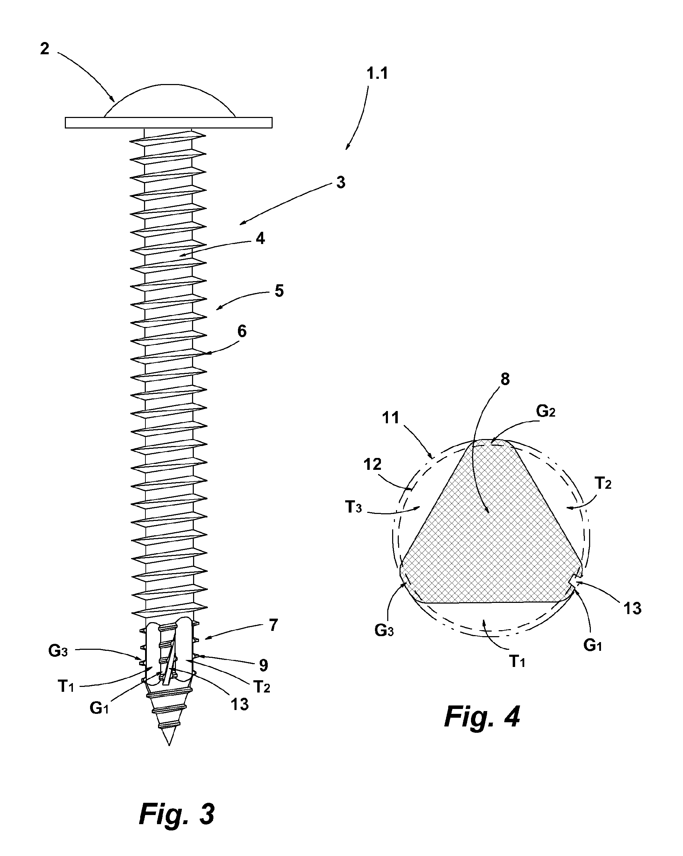

Figur 3 zeigt eine Schraube 1.1 gemäß einem weiteren Ausführungsbeispiel. Die Schraube 1.1 ist ebenso konzipiert wie die Schraube 1 der Figuren 1 und 2. Daher sind gleiche Merkmale mit gleichen Bezugszeichen bezeichnet. Zusätzlich zu den Merkmalen der Schraube 1 der Figuren 1 und 2 verfügt die Schraube 1.1 über eine in ein Gewindesegment G₁ eingebrachte Nut 13. Die Nut 13 ist gleichsinnig zur Steigung des Gewindeabschnittes in diesem Gewindesegment G₁ geneigt, und zwar mit einem gegenüber der Steigung des Gewindes sehr viel größeren Neigung. Die Nut 13 durchtrennt die Gewindeabschnitte auf dem Gewindesegment G₁ und ist bis in den Kern 8 der Schraube 1.1 bzw. des Gewindesegmentes G₁ eingebracht. Mit ihrem von der Spitze der Schraube 1.1 weg weisenden Ende mündet die Nut 13 in die zu dem Gewindesegment G₁ entsprechend der Neigung der Nut 13 benachbarte Spantasche T₂. Durch die Nut 13 werden scharfkantige Gewindeunterbrechungen hergestellt, so dass hierdurch der Einschneidprozess unterstützt wird und das bei dem Einschneiden anfallende Material wird über die Nut 13 weggeführt, so dass die Schneidwirkung über den gesamten Setzvorgang der Schraube erhalten bleibt. Auch die durch die Nut 13 infolge ihres Eingreifens in den Kern 8 gebildete Kante unterstützt den Bohrvorgang. Die benachbarte Spantasche dient unter anderem zur Aufnahme des durch die Nut 13 anfallenden Bohrkleins.

In einer in den Figuren nicht dargestellten Weiterbildung ist vorgesehen, dass mehrere oder auch alle Gewindesegmente eine solchermaßen konzipierte Schneidenut aufweisen können. In einer anderen Ausgestaltung ist vorgesehen, die Schneidenut mit einer zu der Steigung des Gewindes gegensinnigen Neigung auszugestalten.

In einer weiteren Ausgestaltung der Schrauben 1, 1.1 ist vorgesehen, das gesamte Gewinde gezahnt zu konzipieren, wobei typischerweise eine eine solche Zahnung ausbildende Kerbe pro Gewindegang (ein Gewindegang erstreckt sich über 360°) vorgesehen ist.

Die Schrauben 1, 1.1 sind ungehärtet und bei dem dargestellten Ausführungsbeispiel aus einem 20MnB4-Stahl hergestellt.

Die Konzeption des Vorgewindeabschnittes 7 bedingt, dass zum Setzen der Schrauben 1, 1.1 nur ein relativ geringes Drehmoment, verglichen mit herkömmlichen Schrauben benötigt wird. Gleichfalls ist durch die Spantaschen T₁, T₂, T₃ ausreichend Raum geschaffen, die beim Formen des Gewindes in dem jeweiligen Befestigungsgrund anfallenden Späne bzw. den anfallenden Materialaustrag aufzunehmen, ohne die Reibungskräfte nennenswert zu erhöhen. Durch Ausbilden eines Vorgewindes 7 schneiden sich die Flanken des Hauptgewindes 5 in das Vorgewinde ein, wodurch die Schraube 1 besonders hohen Auszugskräften standzuhalten vermag.

Die Beschreibung der Erfindung macht deutlich, dass es sich bei dem in den Figuren dargestellten Ausführungsbeispielen nur um eines von mehreren Ausführungsbeispielen handelt. Beispielsweise können auch andere Querschnittsgeometrien als die dargestellte dreieckförmige für den Vorgewindeabschnitt vorgesehen sein. Ebenfalls ist es möglich, eine Schraube mit zwei, einander diametral zur Längsachse der Schraube gegenüberliegenden Gewindeabschnitten zu konzipieren oder auch solche, die eine quadratische, fünfeckige oder sechseckige Querschnittsgeometrie aufweisen. Es versteht sich, dass mit zunehmender Anzahl der Gewindesegmente der Raum der Spantaschen kleiner und die Anlagefläche der Winkelsegmente an der Bohrlochwandung grundsätzlich größer wird. Daher wird man die Querschnittsgeometrie des Vorgewindeabschnittes bevorzugt mit einer dreieckförmigen oder quadratförmigen Querschnittsfläche konzipieren.

Das dargestellte Ausführungsbeispiel betrifft eine Holzbauschraube. Gleichwohl lässt sich die Erfindung auch bei einer Schraube, die zum Einsetzen in einen anderen Befestigungsgrund vorgesehen ist, anwenden. Bei Bedarf kann die Spitze einer Schraube ebenfalls als Bohrspitze konzipiert sein, beispielsweise wie in DE 20 2004 011 145 U1 gezeigt.

### Bezugszeichenliste

- 1, 1.1: Schraube
- 2: Kopf
- 3: Schaft
- 4: Schraubenkern, Hauptgewindeabschnitt
- 5: Gewinde
- 6: Hauptgewinde
- 7: Vorgewindeabschnitt
- 8: Schraubenkern, Vorgewindeabschnitt
- 9: Vorgewinde
- 10: Außenseite
- 11: Mantelfläche
- 12: Bohrlochwandung
- 13: Nut
- G₁, G₂, G₃: Gewindesegment
- T₁, T₂, T₃: Spantasche

## Patentansprüche

1. Gewindeformende Schraube mit einem an einen Schraubenkern (4, 8) angeformten Gewinde (5, 9) zum Festsetzen der Schraube (1) in einem Befestigungsgrund, wobei das Gewinde (5), ausgehend von der Spitze der Schraube (1) zunächst einen gewindeformenden Abschnitt (7) als Vorgewindeabschnitt aufweist, an welchen Vorgewindeabschnitt (7) sich ein Hauptgewindeabschnitt anschließt, wobei die Flankenhöhe des Gewindes (9) des Vorgewindeabschnittes (7) kleiner ist als diejenige des im zylindrischen Teil des Schraubenschaftes befindlichen Hauptgewindes (6), wobei sich der Vorgewindeabschnitt (7), bezogen auf seine Längserstreckung zumindest mehrheitlich im zylindrischen Teil des Schraubenschaftes erstreckt und in diesem zumindest eine Spantasche eingebracht ist, **dadurch gekennzeichnet, dass** in dem Vorgewindeabschnitt (7) über den Umfang verteilt mehrere, in den Schraubenkern (8) eingebrachte Spantaschen (T₁, T₂, T₃) angeordnet sind und demzufolge der Schraubenkern im Bereich der Spantaschen zumindest weitestgehend eine von der zylindrischen Querschnittsform des Schraubenschaftes abweichende Querschnittsgeometrie aufweist und infolge dieser Querschnittsgeometrie das Vorgewinde (9) im Bereich der Spantaschen (T₁, T₂, T₃) durch jeweils einzelne, sich über einen gewissen Winkel erstreckende Vorgewindesegmente (G₁, G₂, G₃) gebildet ist, und dass sich die Vorgewindesegmente (G₁, G₂, G₃) jeweils über einen Winkel von 10 bis 30°, insbesondere über etwa 20 bis 25° entlang der Mantelfläche (11) erstrecken.

2. Schraube nach Anspruch 1, **dadurch gekennzeichnet, dass** die Spantaschen (T₁, T₂, T₃) das Gewinde des Vorgewindeabschnitts (7) unterbrechen und dieser Abschnitt damit gewindelos ist.

3. Schraube nach Anspruch 1 oder 2, **dadurch gekennzeichnet, dass** das Vorgewinde (9) aus drei mit jeweils gleichem Winkelabstand zueinander angeordneten Vorgewindesegmenten (G₁, G₂, G₃) aufgebaut ist.

4. Schraube nach einem der Ansprüche 1 bis 3, **dadurch gekennzeichnet, dass** die Vorgewindesegmente (G₁, G₂, G₃) eine Länge von mindestens 25 mm, insbesondere von mindestens 30 mm aufweist.

5. Schraube nach einem der Ansprüche 1 bis 4, **dadurch gekennzeichnet, dass** zumindest ein Vorgewindesegment (G₁, G₂, G₃) über eine den Gewindeabschnitt dieses Vorgewindesegmentes (G₁, G₂, G₃) unterbrechende und gleichsinnig zur Steigung dieses Gewindeabschnittes verlaufende Nut (13) aufweist.

6. Schraube nach Anspruch 5, **dadurch gekennzeichnet, dass** die Nut (13) in den Schraubenkern (8) eingreifend ausgeführt ist.

7. Schraube nach Anspruch 5 oder 6, **dadurch gekennzeichnet, dass** die Gewindeabschnittunterbrechung durch die Nut (13) und gegebenenfalls die durch Einbringen der Nut (13) in den Kern (8) gebildete Kante mit der Mantelfläche des Schaftes scharfkantig ausgeführt sind.

8. Schraube nach einem der Ansprüche 1 bis 7, **dadurch gekennzeichnet, dass** das Gewinde (5) gezahnt ausgebildet ist.

9. Schraube nach einem der Ansprüche 1 bis 8, **dadurch gekennzeichnet, dass** die Schraube (1) ungehärtet ist.

10. Schraube nach einem der Ansprüche 1 bis 9, **dadurch gekennzeichnet, dass** die Schraube (1) aus einem Stahl des Typs 20MnB4 gefertigt ist.

11. Schraube nach einem der Ansprüche 1 bis 10, **dadurch gekennzeichnet, dass** die Schraube eine Holzbauschraube ist.

## Claims

1. Thread moulding screw with a thread (5, 9) formed of screw cores (4, 8) for fastening the screw (1) to an attachment, wherein the thread (5), going out from the tip of the screw (1) first comprises a thread-moulding section (7) as a pre-thread section, with a main thread section connecting to said pre-thread section (7), wherein the flank height of the thread (9) of the pre-thread section (7) is smaller than that of the main thread (6) located in the cylindrical part of the thread shaft, wherein the pre-thread section (7), related to its longitudinal extension, extends at least mainly in the cylindrical part of the screw shaft, and at least one chip pocket is located therein, **characterised in that** arranged in the pre-thread section (7), distributed over the circumference, are a plurality of chip pockets (T₁, T₂, T₃) introduced into the screw core (8), and, in consequence, the screw core exhibits, in the region of the chip pockets, a cross-section geometry which differs at least very largely from the cylindrical cross-section shape of the screw shaft, and, as a consequence of this cross-section geometry, the thread (9) is formed, in the region of the chip pockets (T₁, T₂, T₃) in each case by individual thread segments (G₁, G₂, G₃) extending over a certain angle, and that the thread segments (G₁, G₂, G₃) in each case extend over an angle from 10 to 30°, in particular over some 20 to 25°, along the case surface (11).

2. Screw according to claim 1, **characterised in that** the chip pockets (T₁, T₂, T₃) interrupt the thread of the pre-thread section (7) and this section is therefore threadless.

3. Screw according to claim 1 or 2, **characterised in that** the thread (9) is formed of three pre-thread segments (G₁, G₂, G₃) arranged in each case with the same angular distance to one another.

4. Screw according to any one of claims 1 to 3, **characterised in that** the thread segments (Gi, G₂, G₃) exhibit a length of at least 25 mm, in particular of at least 30 mm.

5. Screw according to any one of claims 1 to 4, **characterised in that** at least one pre-thread segment (G₁, G₂, G₃) comprises a slot (13) interrupting the thread section of this pre-thread segment (G₁, G₂, G₃) and running in the same direction to the pitch of this thread section.

6. Screw according to claim 5, **characterised in that** the slot (13) is arranged such as to engage into the screw core (8).

7. Screw according to claim 5 or 6, **characterised in that** the thread section interruption due to the slot (13) and, as applicable, the edge formed by the introduction of the slot (13) into the core (8) with the casing surface of the shaft are formed as sharp edged.

8. Screw according to any one of claims 1 to 7, **characterised in that** the thread (5) is formed as toothed.

9. Screw according to any one of claims 1 to 8, **characterised in that** the screw (1) is unhardened.

10. Screw according to any one of claims 1 to 9, **characterised in that** the screw (1) is made from a steel of the type 20MnB4.

11. Screw according to any one of claims 1 to 10, **characterised in that** the screw is a wood construction screw.

## Revendications

1. Vis autotaraudeuse comportant un filetage (5, 9) moulé sur un noyau de vis (4, 8) afin de fixer la vis (1) dans un support de fixation, lequel filetage (5) présentant tout d'abord, en partant de la pointe de la vis (1), un tronçon (7) d'autotaraudage qui fait office de tronçon de pré-filetage, auquel tronçon de pré-filetage (7) succède un tronçon de filetage principal, la hauteur des flancs du filetage (9) du tronçon de pré-filetage (7) étant plus petite que celle du filetage principal (6) situé dans la partie cylindrique de la tige de la vis, lequel tronçon de pré-filetage (7) s'étendant par rapport à son étendue longitudinale, au moins majoritairement, sur la partie cylindrique de la tige de la vis et qu'au moins une poche à copeaux étant aménagée dans celle-ci, **caractérisé en ce que** plusieurs poches à copeaux (T₁, T₂, T₃), disposées réparties sur toute la circonférence dans le tronçon de pré-filetage (7), sont aménagées dans le noyau de la vis (8), et que, par conséquent, le noyau de la vis à proximité des poches à copeaux présente au moins majoritairement une géométrie sectionnelle qui diverge de la forme sectionnelle cylindrique de la tige de la vis et, qu'en raison de cette géométrie sectionnelle, le pré-filetage (9) à proximité des poches à copeaux (T₁, T₂, T₃) est formé par des segments unitaires de pré-filetage (G₁, G₂, G₃) qui s'étendent selon un certain angle, et que les segments de pré-filetage (G₁, G₂, G₃) s'étendent selon un angle de 10 à 30°, notamment sur environ 20 à 25° le long de la surface d'enveloppe (11).

2. Vis selon la revendication 1, **caractérisée en ce que** les poches à copeaux (T₁, T₂, T₃) interrompent le filetage du tronçon de pré-filetage (7) et que ce tronçon est par conséquent sans filetage.

3. Vis selon la revendication 1 ou 2, **caractérisée en ce que** le pré-filetage (9) est structuré avec trois segments de pré-filetage (G₁, G₂, G₃) disposés les uns par rapport aux autres avec le même intervalle angulaire.

4. Vis selon l'une des revendications 1 à 3, **caractérisée en ce que** les segments de pré-filetage (G₁, G₂, G₃) présentent une longueur d'au moins 25 mm et notamment d'au moins 30 mm.

5. Vis selon l'une des revendications 1 à 4, **caractérisée en ce qu'**au moins un segment de pré-filetage (G₁, G₂, G₃) présente une rainure (13) qui interrompt le tronçon de filetage de ce segment de pré-filetage (G₁, G₂, G₃) et qui s'étend dans le même sens que le pas de ce tronçon de filetage.

6. Vis selon la revendication 5, **caractérisée en ce que** la rainure (13) est conformée pour s'engager dans le noyau de la vis (8).

7. Vis selon la revendication 5 ou 6, **caractérisée en ce que** l'interruption du tronçon de filetage par la rainure (13) et éventuellement l'arête par rapport à la surface d'enveloppe de la tige, formée par l'usinage de la rainure (13) dans le noyau (8) est réalisée avec des bords tranchants.

8. Vis selon l'une des revendications 1 à 7, **caractérisée en ce que** le filetage (5) est formé de façon dentée.

9. Vis selon l'une des revendications 1 à 8, **caractérisée en ce que** la vis (1) n'est pas trempée.

10. Vis selon l'une des revendications 1 à 9, **caractérisée en ce que** la vis (1) est fabriquée dans un acier du type 20MnB4.

11. Vis selon l'une des revendications 1 à 10, **caractérisée en ce que** la vis est une vis à bois.
